(19) **Europäisches Patentamt European Patent Office Office européen des brevets**

(11) **EP 3 562 702 B1**

(12) **EUROPEAN PATENT SPECIFICATION**

(45) Date of publication and mention
of the grant of the patent:
**19.02.2025  Bulletin 2025/08**

(21) Application number: **16858490.2**

(22) Date of filing: **30.12.2016**

(51) International Patent Classification (IPC):
**B60L 3/10** *(2006.01)*      **B60K 28/16** *(2006.01)*
**B60T 8/175** *(2006.01)*      **G01N 19/02** *(2006.01)*

(52) Cooperative Patent Classification (CPC):
**B60L 3/102; B60K 7/0007; B60K 28/16;
B60T 8/175;** B60L 2220/46; B60L 2240/423;
B60L 2240/461; B60L 2240/465; B60L 2240/645;
B60L 2240/647; B60T 2210/10; B60T 2210/124;
B60W 2552/40; B60W 2720/26; Y02T 10/64;

(Cont.)

(86) International application number:
**PCT/SI2016/000030**

(87) International publication number:
**WO 2018/124971 (05.07.2018 Gazette 2018/27)**

(54) **ARRANGEMENT FOR DETERMINING MAXIMUM ALLOWABLE TORQUE**

ANORDNUNG ZUR BESTIMMUNG DES HÖCHSTZULÄSSIGEN MOTORDREHMOMENT

AGENCEMENT PERMETTANT DE DÉTERMINER UN COUPLE MAXIMAL ADMISSIBLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.11.2019  Bulletin 2019/45**

(73) Proprietor: **Elaphe Propulsion Technologies Ltd.
1000 Ljubljana (SI)**

(72) Inventors:
- **LAMPI , Gorazd
  1231 Ljubljana (SI)**
- **MOTALN, Toma
  1000 Ljubljana (SI)**
- **GOTOVAC, Gorazd
  1000 Ljubljana (SI)**

(74) Representative: **Grünecker Patent- und
Rechtsanwälte
PartG mbB
Leopoldstraße 4
80802 München (DE)**

(56) References cited:
US-A- 4 794 538      US-A- 5 135 290
US-A- 5 419 624      US-A1- 2002 124 629
US-A1- 2010 131 165      US-A1- 2010 207 447
US-A1- 2011 209 521

- **WIKIPEDIA: "Slip ratio", 17 August 2015
  (2015-08-17), XP055939157, Retrieved from the
  Internet <URL:https://en.wikipedia.org/w/index.
  php?title=Slip_ratio&oldid=676474320>
  [retrieved on 20220706]**
- **ZHANG YILIN ET AL: "Slip ratio estimation for
  electric vehicle with in-wheel motors based on
  EKF without detection of vehicle velocity", 2016
  CHINESE CONTROL AND DECISION
  CONFERENCE (CCDC), IEEE, 28 May 2016
  (2016-05-28), pages 4427 - 4432, XP032937224,
  DOI: 10.1109/CCDC.2016.7531782**

(52) Cooperative Patent Classification (CPC): (Cont.)
Y02T 10/72; Y02T 90/16

## Description

<u>Background of the invention</u>

The present invention concerns an electric vehicle, specifically an in-wheel motor vehicle, equipped with one or more motors for drive wheels.

<u>State of the art</u>

Globally, high number of accidents on the roads results in damage, injuries and premature deaths. Technology is offering some solutions for improving the safety of passenger and commercial vehicles by improving the road handling performance in a variety of driving situations such as ABS at braking, ASR for improved traction, and ESP in various stability related situations. In addition, there are several further systems that can be used for prevention of accidents, some of said systems are related to different ADAS and act to different levels.

The present invention is focused on one of the most important elements in vehicle stability and road handling. The only point where vehicle is in direct contact with the ground surface is a relatively small surface area of the tire. As a consequence, performance and safety of the vehicle are heavily dependent on the adhesion force between the tire and the ground surface. However, the road friction coefficient varies greatly with tire wear and quality, road surface, and especially with weather conditions, as well as other unpredictable parameters such as tire pressure and road profile, including curvature and incline.

Most of prior art is focuses on the determination of wheel slippage and vehicle course deviations when they have already occurred. Further steps then reactively adjust torque distribution between different wheels of the vehicle in order to regain and/or improve the grip and stability of the vehicle.

Examples of solutions for reactive traction control and controlling of slippage after it had been detected are described in: US 5 419 624 describes an apparatus for determining a critical driving torque and information representing the coefficient of friction at the wheel grip limit for a vehicle having a plurality of driven wheels.

WO2015005215 where strategies for determining the slip using the rotation angle sensor and then quickly eliminating it with reduced torque at the wheel; GB201210282 which focuses on calculation of possible torque by a mathematical method and then adjustment the parameters of driving if required; and WO201511540 a method is described where engine torque in an internal combustion propulsion system is reduced in case of recognizing the slip on the wheels. CN104175902 is dealing with torque control and slip prevention in propulsion systems with in-wheel motors. Part of this system is also a so called "road surface information module". The invention mention also the "coefficient of adhesion", but the solution is providing only reactive adaptation of torque vectoring in different driving conditions after the wheel slip had already been detected.

CN103886190 uses a mathematical calculation for determination of the critical peak torque, where there should be no slip, for the complete vehicle and then adjust the torque command of the driver accordingly.

Besides approaches controlling torque and traction, there are also several solutions in the field of slip control during baking. WO2013045584 describes a possible strategy for controlling multiple brakes, their control unit and as a result influencing the distribution of the braking with electric motors and friction brakes when a brake request is done by the driver. In IN4539/CHE/2011, tire pressure is changed in a critical situation in order to improve the grip of the tire to the road. The system includes the predetermined look up tables for different parameters. CN101920704 is focused to road surface self-adaptive torque control system of electric auto mobile where road surface parameters are recognized. But it focuses on reactive determination of these parameters after critical conditions are met at one wheel and then determining the best torque distribution between the different wheels. Similar solutions are also described in US6272420, US6223114, US5944392, US2007016354, JPH11334555, US6076033, US8498775, CN101920704, US6418639.

The above and other previous art solutions do not describe a method for the determination of the possible wheel torque and steering angle at the boundary between the non slip and slip operation, not only when these conditions are already reached, that is the slippage of the wheels or unwanted deviation from vehicle course had already been detected, but while the wheels still operate in a non-slip mode with good grip of the surface. All the methods presented above are either mathematical methods of calculating the expected critical conditions from the vehicle telemetry data or they are methods for determination if the slip has already occurred and then adjusting the parameters of driving to return to and stay within the safe value range. The above methods have a serious drawback that there is no real time testing during the driving involved in order to adjust parameters of calculation for a specific situation which is related for example with road surface condition. What is needed is a solution that will predict the safety limit and adjust propulsion parameters before dangerous situation caused by slip can occur.

Such solutions are provided in:

US5419624, in which an arrangement for determining a parameter representing a critical torque at a driving wheel of a motor vehicle is described, wherein the motor vehicle has a plurality of driving wheels, wherein torque detecting means determine a torque parameter corresponding to the magnitude of the respective drive torque, wherein in addition rotational speed detecting means determine a rotational speed parameter corresponding to the magnitude of the respective rotational speed of the driving wheel, and wherein a computational unit is provided for determining and outputting the critical torque information, characterized in that, (1) the driving wheels are each driven individually by electric motors which can be operated separately by torque controllers, (2) the computational unit causes a transient increase in the drive torque, at at least one driving wheel, over that of the other driving wheels , wherein the increase is a predetermined fixed amount or a predetermined percentage of the current drive torque of this driving wheel, (3) the rotational speed parameters which are determined of the driving wheel with the increased drive torque and of at least one driving wheel with a lower drive torque are compared with each other in the computational unit in the sense of identifying slip, (4) when the computational unit ascertains a rotational speed difference which does not exceed a predetermined, tolerable relative rotational speed difference it either emits a signal indicating that the transiently increased drive torque is of an uncritical magnitude, or causes the increase in drive torque to be made again with a greater amount of torque increase, wherein when the predetermined tolerable relative rotational speed difference is reached a signal representing the critical torque is then emitted, and (5) when a rotational speed difference exceeding the predetermined tolerable rotational speed difference (in excess of the wheel adhesion limit) is ascertained by the computational unit in the sense of an iterative approximation to the tolerable relative rotational speed difference by repeated increases of the drive torque by an amount of increase which is less in the first step at least, the critical torque is determined and output as a signal; in

US8055424, where a method is described for determining a road surface condition for a vehicle, said method comprising: determining a plurality of vehicle operating parameters; determining whether the vehicle is traveling along a substantially straight line or along a curve; increasing or decreasing the speed of one of front wheels or rear wheels of the vehicle for a predetermined period of time; increasing or decreasing the other of the front wheels or the rear wheels of the vehicle a corresponding and opposite amount so that the speed of the vehicle does not change; determining a tire/road surface coefficient of friction based on the change in the speed of the wheels of the vehicle; determining a wheel-slip ratio from the change in the speed of the wheels of the vehicle; and determining the road surface condition based on the tire/road surface coefficient of friction and the wheel-slip ratio; in US8886381, where an electric vehicle is described comprising: (1) a motor unit configured to drive a drive wheel; (2) a motor control circuitry configured to control the motor unit in accordance with a motor torque command value that is generated based on commands produced from an acceleration manipulation unit and a deceleration manipulation unit; (3) a slip ratio estimator configured to estimate a slip ratio of the drive wheel on a road surface, based on a detection value indicating a travel speed of the vehicle and a rotational frequency of the drive wheel; (4) a disturbance observer configured to estimate a torque that is attributable to external force that acts on the vehicle, based on the detection value indicating a travel speed of the vehicle and the motor torque command value; (5) an applied torque estimator configured to estimate an entire torque applied to the drive wheel, based on (i) the motor torque command value or a motor current value of the motor unit and (ii) the torque estimated by the disturbance observer that is attributable to external force; (6) a coefficient of friction estimator configured to estimate a coefficient of friction between a road surface and a tire of the drive wheel, based on the torque estimated by the applied torque estimator and the slip ratio estimated by the slip ratio estimator; (7) a maximum acceptable torque determiner configured to determine, according to a predefine rule, a maximum acceptable torque, based on the estimated coefficient of friction and a vertical load component acting on the drive wheel; and (8) a motor torque command value limiter configured to limit, based on the determined maximum acceptable torque, the motor torque command value to the motor unit that is generated responsively to the acceleration manipulation unit and the deceleration manipulation unit; and in

US8463497 provides an alternative method of measuring the road grip coefficient by using simultaneous clamping or, toe-in toe-out mechanism, of left and right wheels to produce slippage, however this method requires a complicated mechanism for steering the wheels in opposite directions.

These solutions may be considered as closest prior art, however, an improved arrangement is needed, for repeatable and quick method for measuring the response of the drive wheels to changing road conditions, especially with regard to eliminating variables that are not readily controlled by the systems, such as acceleration/breaking status, curves/steering, load imbalances between various wheels, gearing and similar. They lack a method for determining the actual road condition at any given instant. It has been proposed to have regular measurements of slip induced by short bursts of torque, however that only provides a comparative value of slip and an actual road friction coefficient is not determined. It would be beneficial to have a method at disposal for accurately determining the road friction coefficient at any time during operation of the vehicle, including regular checking of how the coefficient is changing with time/distance travelled. This would allow the system to precisely estimate starting parameters whenever a situation arises when quick braking and acceleration is required or whenever the vehicle reaches an inclination or a curve.

Problem to be solved

The object of this invention is to provide an improved arrangement for determining a maximum allowable torque, which is capable of measuring driving wheel parameters, specifically with regard to varying road surface conditions that would be simplified through decreasing the number of variables that need to be taken into account in calculations of critical torque. Specifically, this arrangement should also provide from these calculations a more accurate determination of the slip curve to allow the system to precisely estimate starting parameters whenever a situation arises when quick braking and acceleration is required or whenever the vehicle reaches an inclination or a curve as well as to optimize the torque distribution to different wheels during non-critical driving conditions.

Solution according to the invention

A solution according to the invention is provided by an arrangement according to the features of Claim 1. Possible advantageous features and embodiments of the invention are the subject matter of the dependent Claims.

According to the invention, an arrangement for determining a maximum allowable torque at a driving wheel of an electric motor vehicle is provided, wherein maximum allowable torque defines the maximum torque that can be applied to a road surface by the driving wheel before the torque at the driving wheel starts to decrease with increasing wheel slip of the driving wheel, the arrangement inter alia comprising two or more driving wheels, optionally a torque detecting means, rotational speed detection sensors for each driving wheel, a computational unit configured to adjust output torque at each driving wheel, wherein the driving wheels are each driven individually by electric motors each configured to be operated separately by an inverter controlling torque output of the motor, and wherein the computational unit is configured to trigger a transient change in the drive torque at at least one driving wheel, and wherein rotational speed parameters are determined in said at least one driving wheel, wherein said electric motors are direct drive motors, without implementation of gearing and transmission elements, wherein said rotation speed detection sensors are designed to detect rotational differences of equal or less than 1 degree for each driving wheel, wherein said rotational differences are evaluated by said computational unit to determine tire slip ratio defined by the ratio of the resulting rotation speed of wheel change during the transient change of torque and the baseline rotation speed of the same driving wheel when the vehicle is at constant or at nearly constant speed, wherein the computational unit is configured to transiently apply several differing torque changes to the same driving wheel in a short sequence within the total time of 0.5 seconds, more preferably less than 0.1 seconds, said differing transient torque changes comprising a cycle in order to obtain several measurement points of slip ratios in dependence of the magnitude of transient torque changes and to determine from said measurement points a slip curve for the current driving conditions, said slip curve being the basis to determine at its peak the maximum allowable torque , which is further defined as the torque at which the maximum of the driving force delivered to the road surface is achieved, where maximum acceleration or deceleration force is applied to the vehicle.

In order to provide an improved and simplified arrangement for determining maximum allowable torque, the determination of torque is preferably performed continuously at predetermined time intervals, ideally when the vehicle is on a straight segment of road at near constant speeds. In this manner, it is possible to determine maximum allowable torque in non-critical condition. Therefore, the vehicle control systems are able to adapt to possible critical conditions as well as normal driving conditions, such as curves, inclinations, etc. much faster as they occur, since the maximum critical grip is determined continuously and is known before a critical event occurs. This provides a substantial benefit to the known system of reactive adaptation after a critical event has occurred. It is very important that the measurements and calculations involved are performed quickly, especially if the maximum allowable grip is to be determined with increased precision. Therefore, the direct drive system, where very few parameters are variable (there is no gearing, transmission, etc.), combined with a very fast and accurate sensor of driving wheel rotation speed with sensitivity below 1 degree, preferably 1/10 of a degree, and frequency of measurement of preferably at least 1kHz is needed, preferably at least 50kHz. Direct drive motors and high sensitivity sensors allow measurements of parameters essential for calculation unit within a few milliseconds which in turn allows for the measurement of several data points of slip versus applied torque to the driving wheel. From these points it is possible to derive a slip curve regardless of the current vehicle and road surface condition and determine maximum allowable torque with the desired accuracy that is dependent on the number of measurements that are performed within a determination cycle.

Rotational differences according to the invention, representing the slip of the driving wheels, are further evaluated by said computational unit to determine tire slip ratio, defined by the ratio of the resulting rotation speed of wheel change during the transient change of torque and the baseline rotation speed of the same driving wheel. Slip ratio is calculated as the increase/decrease of wheel rotation speed upon a change of torque or applied to the driving wheel. Typically increase of wheel rotation speed of up to about 15%, as compared to the previous steady-state speed, is considered to be within the region where grip is still in the linear region, e.g. tire is not slipping in a conventional driver approach sense. Wheel rotation speed is measured by a sensor mounted on the driving wheel, preferably in close proximity of the rotation axis.

Embodiments of the invention

Maximum allowable torque according to this invention should be understood as the maximum torque that can be applied to a driving wheel in order not to exceed the torque at the point of the slip curve where the force applied by the wheel to the road surface begins to lower from the maximum achievable force, which is in turn dependent on parameters connected with the vehicle, such as current weight load of the wheel, tire condition, steering and on outside parameters such as temperature, road condition, inclination and others.

In a possible embodiment, the resulting total accelerations caused by the maneuver of transiently changing drive torques are not detectable by the vehicle driver. The changing of the torques on one of the driving wheels invariably results in accelerations or decelerations, mostly in the lateral directions, but to a lesser degree in other directions as well, especially when a vehicle is in a curve. As a direct result, these accelerations are felt by the driver and passenger. These accelerations are, however kept to the minimum if the system controls the total applied torque to all driving wheels of the vehicle in such a way, that the total applied torque for all driving wheels remains constant. With this technique, as well as others, it is possible to keep peak accelerations felt by the persons in the vehicle resulting from changes in torque applied in order to determine slip curve and other parameters to below 0,05 g/s which is considered below the level of detection.

In a possible embodiment, the current driving conditions for which the slip curve is determined from said measurement points, includes tire condition, temperature, road surface condition and inclination, said slip curve being the basis to determine further critical parameters for driving conditions, such as maximum friction coefficient and linear slip ratio region. With a determination of several slip vs. Torque points in a cycle in line with the invention it is possible to fit onto the resulting points a typically shaped slip curve. The most prominent features of this curve are the linear sections at low slip ratios (e.g up to 5-10% slip ratio), then the curve continues into the non-stable region, reaching a maximum torque value that can be applied to the road surface by the driving wheel, before dropping lower again when large slip ratios occur. Said value, called maximum allowable torque throughout present invention, defines the value of torque which should not be exceeded at any moment, since application of larger torque would result in complete wheel spin in case of acceleration and blockage of the driving wheel in the case of braking. The value of the maximum allowable torque is changing constantly in accordance with road conditions, road surface attributes, inclination, loads on each wheel, steering, temperature and similar. It is therefore very important to determine maximum allowable torque as frequently as possible so that the parameters for braking or acceleration in a critical situation or a curve entry speed may be proactively adapted even before the event occurs.

In a possible embodiment, it is further beneficial that said differing transient torque changes in a said cycle range from 10% of estimated maximum allowable torque change to 170% of estimated allowable torque change, wherein the actual selected torque changes are dependent each time on previous measurements in the same cycle, in order to minimize the required number of measurements for determining said slip curve but still be sufficient to unequivocally determine the slip curve in which the maximum allowable torque is determined with the margin of error of 5% or less. An algorithm has been proposed for determination of applied torque values sequence with two competing goals of (1) determination of the maximum allowable torque with high accuracy, and (2) shortest possible cycle for determining maximum allowable torque. As a result, it is deemed most favorable to keep the number of steps with application of different torques to the driving wheel below or at least near 10, while ensuring that the accuracy of the resulting maximum allowable torque calculation is within 5 %.

In an embodiment, the torque changes are applied in a single sequence of step-wise torque changes of the same size allowing intervals of up to 20 ms between said changes of torque in order for the torque applied to the driving wheel to stabilize and a point on said slip curve to be determined. By applying increasing or decreasing torques in a quick sequence without returning to neutral (driving torque) state, the determination of the slip curve can be significantly faster, since each time the new applied torque only increased by one step (typically not exceeding 1/10 of maximum torque output by electric motor) and the torque at the contact of the driving wheel with the road surface is stabilized quickly, that is faster than in 10 ms.

It is envisaged in another embodiment, that the time interval between cycles of determining parameters is between 0,1 and 5 seconds, preferably between 0,5 and 2 seconds, wherein said interval is adjusted within this range according to previously detected conditions. The above mentioned interval between the cycles is meant as the time between the start of the previous cycle and the start of the next cycle. Depending on the usage of the data obtained in said cycle (e.g. maximum allowable torque measurement, tire wear module measurement), as well as on the number of wheels that the cycle measurements are performed on, different intervals may be optimal. The shorter intervals, below 1 second are used when only one or few driving wheels are measured and/or road conditions are such that a low traction conditions may arise instantaneously (rain, low temperatures,...). On the other hand, when the road conditions are deemed by the system to be stable and no sudden changes are expected according to the previously detected conditions (e.g. dry highway conditions), the longer intervals may be used.

In another possible embodiment, said arrangement further comprises a tire wear assessment module capable of assessing the wear of each individual tire on each of the driving wheels. It is a result of differences in the detected slip ratios as compared to slip ratios for other driving wheels when comparable changes of torque are applied to said driving wheels, and/or as a result of the changes in the detected slip ratios as compared to a history of recorded slip ratios for the same wheel. Tire wear assessment module may be implemented on one wheel at a time or more wheels simultaneously. When the tire wear assessment module assessment is made that one or more of the tires are exhibiting increased wear as compared to the other tires (their wear may be assessed simultaneously or compared from available data). Said assessment is not only qualitative, but also qualitative, meaning that the module is able to adjust the torques applied to each individual driving wheel in order to relatively decrease the wear of the targeted wheel(s) as compared to the other wheels. After the strategy has been implemented for a longer period of time, the wheel in question does not any more exhibit excessive tire wear and its torque loads may therefore be adjusted back to normal values. In similar embodiment it can also be used with other purpose. It can be used for assessment of tire quality. It can be used for road quality assessment. It can be used for assessment of road conditions.

In an additional embodiment, the tire wear assessment module compares the history of the data obtained by available sensors and calculations within the vehicle system for different individual wheels, to assess whether the slippage of any of the tires is increasing disproportionally over time as compared to other tires on other wheels. The module maintains a database for each individual wheel of measured slips and/or maximum allowable torques on three different time levels. A short (e.g. 1 hour of driving) medium (e.g. 10 h) and long (e.g. 100 h) time period. Through the comparison of the levels and trend lines of these different time levels, the module is able to assess the relative wear of each tire as well as filter out the possible outside parameters causing disturbances in the measured values.

In a further embodiment, the tire wear assessment module is capable of selectively influencing the balance between different driving wheels in order to reduce the relative torques on the wheel exhibiting increased slippage as an indicator of increased tire wear, wherein the torques are distributed between all other wheels in a way that the stability of the vehicle remains unaffected and the total torque applied to the road surface remains unchanged. It is beneficial that the tire wear assessment module does not reduce or increase the total torque applied to all driving wheels combined in order not to cause accelerations/decelerations that could be felt by the driver and/or passengers of the vehicle. On the other hand, the stability of the vehicle must also be taken into account so that the changes in torques do not contribute in any way to a decrease in the safety of the vehicle.

It is conceivable that the data obtained by available sensors and calculations within the vehicle system, such as road friction coefficients, maximum allowable torque, tire condition and others, are communicated to the driver during the driving, to the driver after the driving to inform him about the safety aspect of his driving, to vehicle maintenance personnel to inform them about the tire quality and/or to road maintenance personnel to inform them about the quality of the road surface. There are significant possible advantages when the data obtained by the vehicle are communicated in real time or afterwards to various locations. Real-time communication may be used to warn other vehicles on the same road of any treacherous conditions arising unexpectedly and to conceivable put into effect electronic speed limits in order to prevent accidents. It is also beneficial if service centers receive significant information through which a fault in the vehicle in question or even a whole vehicle series can be detected. Finally, it can be beneficial if the driver is able to see the warnings and recommendation in real time while driving, for example a warning that a curve is approaching and what the safe speed that is recommended for that curve might be. An automatic adjustment of speed is also conceivable to same effect.

It is also envisaged that said transient changes in drive torque are produced on only one or more wheels of one axis. There are different strategies that may not involve all driving wheels but rather a single-axis wheel, depending on which module is involved. In another embodiment, said transient changes in drive torques are produced sequentially and/or simultaneously on various driving wheels or on various combinations of driving wheels. There are different strategies where not all involved

driving wheels are assessed simultaneously but rather a consequentially and in different driving wheel combinations, depending on which module is involved.

It is conceivable, that the arrangement according to any of the previous embodiments, is further characterized in that the geographical position of the vehicle is determined by GPS or other method and where the road route is determined by maps or cameras or other method and where data obtained by available sensors and calculations within the vehicle system is utilized for adjusting vehicle speed before entering into a curve. GPS data can be effectively incorporated into the algorithms for maximum allowable torque determination, as well as the tire assessment module. It is clearly beneficial for the projection of necessary adjustments when the system is able to obtain the data when the vehicle is entering a curve or an inclination, before that even occurs. Additionally, a GPS system may also be used as one of the options for communication between vehicles on the same segment of road exchanging critical information, including maximum allowable grip, or in this case rather road friction coefficient, possible incidents and other information.

In an embodiment, said tire wear assessment module, in combination with the determination of geographical position is able to recognize a frequently used route, such as drive to work, and compare the data for this route with previous runs of the same route. This makes comparison between different runs that are on the same or substantially the same route much easier, facilitating the exclusion of disturbing parameters such as weather, vehicle load, traffic congestions and similar.

Short description of the figures

The invention is described in more detail below on the basis of embodiments and with reference to the drawings in which:

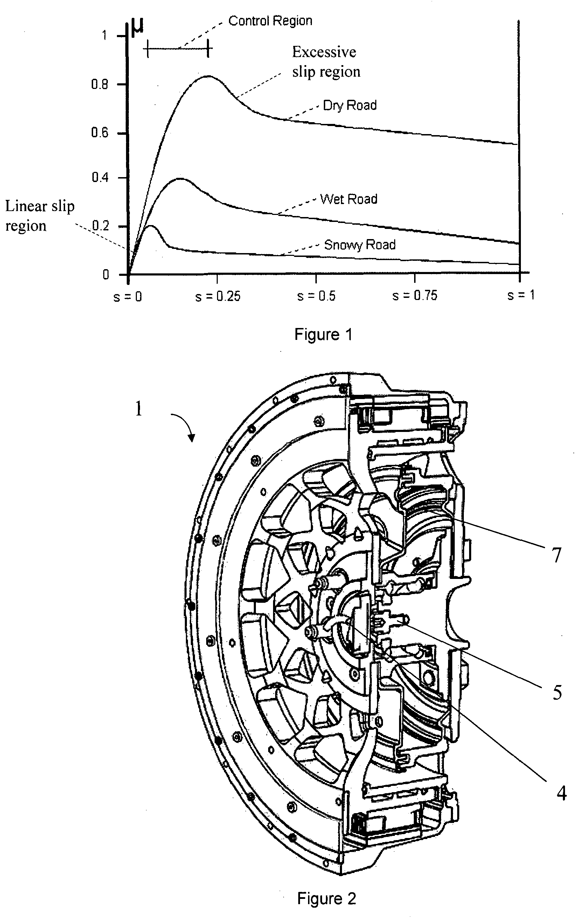

Figure 1 is a representation of slip curves in different road condition, adapted from Matsumoto, N. et. al., "Expert antiskid system", IEEE IECON'87 (1987), p. 810 - 816; Figure 2 shows an embodiment of a wheel arrangement for implementation of the arrangement for determining maximum allowable torque.

Detailed description

The present invention allows approximate determination of the critical conditions for slip of each individual driving wheel 1 at any specific point in time and at any specific vehicle operating conditions in an electric vehicle. The method includes both measurements of parameters during the driving of the vehicle and calculations of additional parameters according to a predetermined algorithm. The process is designed not to be detectable for the driver and passengers and not to affect negatively in any way the vehicle safety.

An arrangement for the determination of maximum allowable torque through an accurate calculation of the slip curve which is dependent of the effective adhesive coefficient of the road surface is presented, which further allows the prediction of said maximum allowable torque at the boundary between the non-slip and slip operation.. The presented solution not only detects the vehicle, road and environmental conditions in terms of slip or non-slip operation, but also predicts the critical values at which the slip will occur. Using the obtained information new opportunities for active and passive safety become possible. In addition, steering angle for each individual driving wheel and/or any combination thereof may be taken into account. Determination of critical conditions for slip of the driving wheel or other wheels is of crucial importance and can be used for several safety features such as ASR, prevention of entering into a curve with excessive speed, monitoring or informing the driver about the safety during the driving, informing the vehicle maintenance personnel about the wear and safety aspect of tires, informing the road service authorities about the safety conditions of the roads at different sections.

The above mentioned features can prevent many accidents, damage, injures and premature deaths. The present solution is specifically designed to be implemented in any electric vehicle with fast response between the torque request and torque delivered to the driving wheels 1 as well as with fast monitoring of wheel angular rotation. It is crucial to have a propulsion means, such as electric motor 7, that is able to process the requests for change in output torque within the several milliseconds range or faster, to allow several cycles of measuring and adapting torque to be possible. Such a cycle typically includes applying the desired torque to the selected driving wheel(s) 1, registering the measured parameters through appropriate sensors, assembling the data in the central computational unit 6 of the vehicle, calculating the desired reaction (typically outputting new torque value) and sending the next cycle input parameters to the system.

Field oriented control can be used as an electric torque controlling method that enables fast torque changes. If rotor position is known, the applied phase currents of the electric motor 7 can be transformed by using simple geometric transformations into two vector components - direct and quadrature currents. Quadrature current vector is perpendicular to the rotor orientation and causes a stator magnetic field that is perpendicular to the rotor magnetic field, and is responsible for torque generation. During normal operation, the direct current vector, that is parallel to the rotor orientation, is desired to be zero. Since quadrature current is always perpendicular to the rotor orientation, it is independent of the motors rotational speed, therefore a simple controller can be used for its control, that enables fast system response and stable operation at any speed. The change of the motor torque is therefore limited only by the inductivity and the resistance of the motor windings.

Said sensors may include wheel rotation speed sensors 5, including angular sensors, load sensors, inclination sensors, tilt sensors, GPS sensors, lateral force sensors, lateral slip sensors, acceleration/deceleration sensors, temperature, humidity, rain sensors and others. To achieve the desired short cycle time, it is essential to minimize mechanical disturbances and/or steps, such as gearing, transmission and similar, which is why the type of engine to wheel connection is a direct drive system, where the signals from the electric motor 7 are directly proportional to the actual forces resulting on the driving wheel and the tire. The response times for such an arrangement are in a millisecond range, meaning that the time from the command for a change in applied torque by the computational unit of the vehicle to the actual change in torque at the connection between the tire and the road surface is below 2 ms. Further, simulations of the vehicle system response regarding the time necessary for the new value of torque applied to electric motor 7 to a stable wheel speed at the tire road interface have shown, that the time from the initial signal of increased/decreased torque to the response and stabilization of the speed of the driving wheel 1 is less than 10 ms.

In combination with the above features, it is essential, that the solution according to this invention also comprise a high-accuracy wheel rotation speed sensor 5 attached to each driving wheel 1. Since the determination of the slip curve relies substantially on precise determination of slip that occurs at the driving wheel 1 where the torque is altered from a stable driving state, it is imperative that as small as possible changes

in wheel speed are readily detected. The described solution comprises sensors that are able to detect a change of 1/10 of a degree in rotation of each individual driving wheel 1 (one speed sensor 5 per wheel is applied) and are therefore able to detect even a small amount of slip occurring in the stable region (typically with slip ratio below 15%, and in low-grip conditions such as snowy road below 5%). In addition, in order to calculate the slip curve and consequently determine the maximum allowable torque, it may be beneficial to also measure or calculate the load on the driving wheel 1. Load may be measured directly by a load sensor, positioned in the driving wheel 1 or, alternatively through calculations of the distribution of the load to different wheels according to current conditions of the vehicle (speed, curvature of the road, incline, steering wheel angle and similar).

The transient change in the drive torque is not done on all driving wheels 1 at the same time. The data from rotational speed detection sensors 5 is taken on the wheels without transient change in the drive torque. The data is used for estimation of the vehicle speed. The computational unit is capable of determining several points on a slip curve. This is possible to do during single transient change in drive torque, for example, one of embodiments implements an algorithm where torque is sequentially increased in several steps from baseline value by a predetermined amount not exceeding 1/10 of maximum torque output of the electric motor 7 in each step - as mentioned above, the torque output at the driving wheel stabilizes within 10 ms and after that the next higher torque is applied by electric motor 7, until sufficient data points for calculation of the slip curve are obtained. Motor torque control algorithm is taken into account. The torque is determined in relationship with the motor torque algorithm. Current shape and torque determination take into account specific parameters related to PWM frequency and other data. Other data can be motor electrical parameters such as inductivity, resistance. Propulsion system data such as battery voltage can be used.

In Figure 1, a representation of slip curves for different road surfaces is shown. Dependence of road friction coefficient $\mu$ on driving wheel slip ratio s is shown. It should be noted that friction coefficient is directly correlated to maximum allowable torque that is applied to the driving wheel. Maximum allowable torque is, when other parameters are kept constant or close to constant (e.g. weight distribution on driving wheels of the vehicle) a function of friction coefficient and gravitational force of the driving wheel to the road surface. Therefore, the slip curve relating to torque is of a very similar shape to the slip curve relating to the road friction coefficient. Especially so in the described embodiments, where the measurements of slip are made through the use of short (millisecond range) bursts of torque to some of the wheels which do not result in significant changes in weight distribution to different wheels of the vehicle. Figure 1 further shows three slip curves possibly of the same driving wheel 1 in different road surface conditions: dry road, wet road and snowy road. It is clear that the slip curves in all three (as well as other ) road surface conditions have basically the same shape. This shape has three main features: (1) in the region of slip ratios s below 0.05, the driving wheel is in a linear slip region where traction is always good and the slip is linearly increasing with increase in applied torque not resulting in excessive wheel spin; (2) control region is the region of slip ratios above 0.05 and up to about 0.10-0.25, depending on road conditions - the main feature of the control region is that slip no longer linearly increases with torque, but rather reaches a maximum value at the highest slip ratio within this region - this maximum in torque is called maximum allowable torque according to this invention; (3) excessive slip region is the region where the slip increases while the force that is transferred from the driving wheel to the road and results in acceleration or deceleration of the vehicle no longer increases, but rather decreases with increasing slip ratio, ultimately resulting in a complete wheel spin where s=1. Maximum allowable torque is the point of the slip curve, where optimal acceleration/deceleration can be achieved according to road surface and vehicle conditions. When torque is increased beyond maximum allowable torque, the force transferred from the driving wheel to the road surface stops increasing but rather decreases as the tire loses grip. If several points on the slip curve are determined in short cycle by the system, it is possible to fit a slip curve to them with a high accuracy even when only 6-8 points of the slip curve have been determined. As the typical shape of the slip curve does not change its characteristics regardless of the road and vehicle conditions, it is possible to determine the slip curve as well as maximum allowable torque in any conditions. The slip ratio can be determined in a time shorter than 10 ms, preferably shorter than 2 ms. The time of each individual slip ratio determination within the measuring cycle should not be longer than 100 ms in order to avoid possible influences on the stability of the vehicle.

The first approximation vector formula to determine maximum allowable torque is derived as:

$$M_{max} = \rightarrow F_{rad} \times \rightarrow r \qquad (1)$$

where $M_{max}$ is maximum allowable torque; $F_{rad}$ is tangential force on the tire surface resulting from applied torque; r is radius of the tire

The scalar formula to determine rolling friction force is derived as:

$$F_{fr} = c \cdot W \qquad (2)$$

where $F_{fr}$ is rolling friction force; c is dimensionless coefficient of rolling friction; W is normal force of the wheel to the road surface according to the current condition of the vehicle and is derived as:

$$\vec{W} = m_{dw} \cdot \vec{g} \qquad (3)$$

where $m_{dw}$ is mass load on the driving wheel; g is gravitational acceleration

The vector formula to determine the force between the tire and the road surface causing acceleration is derived as:

$$\vec{F}_a = \vec{F}_{rad} + \vec{F}_{fr} \qquad (4)$$

where the drag resistance of the air is neglected, $F_t$ is force between the tire and the road surface causing acceleration), $F_{fr}$ acts in opposite direction to $F_{rad}$

From (1) and (2) when $F_{rad}$=Ff$_r$ (this is true when $M_{max}$ is reached and drag resistance neglected), the scalar formula to determine maximum allowable torque is derived as:

$$M_{max} = c \cdot W \cdot r \qquad (5)$$

from (3) and (5) follows:

$$M_{max} = c \cdot m \cdot g \cdot r \qquad (6)$$

slip ratio is defined as

$$\frac{(v_w - v_s)}{v_s} \qquad (7)$$

where $v_w$ is velocity of wheel rotation; $v_s$ is velocity of vehicle (the driving wheel 1) in relation to the road surface.

For more detailed calculation also wheel moment of inertia and other parameters can be used.

In a given situation, $m_{dw}$ is not changing when short measurements of slip as a result of applied torque are performed as described above, since there is not enough time for the loads of the different driving wheels 1 to adapt before the torque is returned to the original values. Therefore, $M_{max}$ is directly dependent on $\mu$. Through the use of an algorithm in the computational unit 6 of producing a sequence of 6 - 8 measurements of slip at different torques, a slip curve can be plotted that allows a determination of $\mu$ and $M_{max}$ with an accuracy of within 5%. In the present embodiment, the algorithm starts at applying 10% of the previously calculated $M_{max0}$ (determined in the previous measurement cycle, if there is no such previous calculation a generic baseline level is provided in the algorithm). The measurement with 10% $M_{max0}$ establishes a baseline control as this is always in the linear slip region. The next measurement point is at 50% $M_{max0}$, which is the value that is typically in the non-stable region when conditions are e.g. snowy or icy. If this is the case, the slip will increase significantly more than 5-fold from the first measurement point and it may well be that the wheel goes into complete slip. If non-stable slip is detected, the next step is a value below 50% $M_{max0}$ and halfway between the next previous measurement in this direction (which is 10% $M_{max0}$). As a result, the next measurement is at 30% $M_{max0}$. Depending on the next assessment whether the slip is in the linear or non-stable region, the next value for the measurement point may be 20% or 40% $M_{max0}$ and the next 15%, 25%, 35% or 45%, and so on. As shown above, the algorithm very quickly finds the relevant points needed to determine $M_{max}$ - in this case the new measured $M_{max}$ (which serves as $M_{max0}$ for the next measurement cycle). The algorithm in the computational unit 6 may be unable to unequivocally determine whether the slip is in the linear or non-stable region, in which case it will do the next two measurements on each side of the last measurement to determine which is the direction to proceed. For example, if at 50% $M_{max0}$, the algorithm is not able to unequivocally determine whether slip is linear or non-stable it will do the next two measurements at 30% $M_{max0}$ (calculated as described above) and 70% $M_{max0}$ (measurement at the same distance to the other side). Generally, this should be sufficient to determine the characteristics of a curve of which the general shape is known. If not, another step using the same principle may be made to be sure. If the road grip conditions are very good, the system will need three or possibly four steps (10%, 50%, 90%, 130%, 170% $M_{max0}$) to detect the non-stable region and then three more to find the value of $M_{max}$ within 5% accuracy (margin of error below 5%). This case would necessitate 8 measurements. It is possible to increase the sensitivity of the described determination of $M_{max}$ by adding further steps, however this will increase the time of each cycle accordingly.

It should be noted that such an algorithm may result in the used torques falling in the region of the curve when slip ratio is high enough that the torques that can be applied are falling when slip ratio increases (slip ratio is higher than at maximum allowable torque). This must be taken into account by the computational unit 6 algorithm, so in some cases it may be necessary to add an additional torque value to ensure it is the actual maximum allowable torque (peak of the slip curve) that is determined by calculations.

Since the time necessary to apply a new torque command to the torque controller 8 and to the driving wheel 1 is in the 1 - 2 ms range the resulting wheel spin occurs very rapidly as a consequence of the direct drive setting and the measurements by the speed sensor 11 of the resulting driving wheel 1 rotation speeds are performed at a frequency of up to 50kHz or more, it is the processing time of the data by the computational unit 6 that may be a limiting factor. With fast processing, it is conceivable to perform 10 or more torque commands and measurements of spin rate within 0,1 second. This is sufficient to allow the algorithm to determine the maximum allowable torque with the accuracy of far better than 5%. The accuracy should not be the main objective as the maximum allowable torque may change within the measuring period of a described cycle therefore reducing the possible accuracy. It is estimated that the best results are achieved when the cycles are quick (below 0,1 sec in total length, repeated every 0,1-0,5 seconds and the target accuracy of the maximum allowable torque is about 5%. For such accuracy, the cycle needs to be 6 - 8 measurements long as described above. Cycle length as well as cycle frequency may be adjusted when the conditions are deemed especially stable (e.g. high grip, highway conditions) or especially unstable (e.g. snowy road, curves, inclination) by the system based on predetermined parameters.

Another important aspect of performing quick cycles as mentioned above is to ensure that the disturbance felt by the driver and passengers in the vehicle during road condition assessment is minimal or preferably non-detectable and therefore the comfort is not affected. This is a result of short times of each individual torque being applied, as well as the setting where all torques combined from all driving wheels are kept constant. It is preferable, that accelerations resulting from changes in torques are kept below 0,05 g, which is deemed below the level of detection for a person traveling in a passenger vehicle.

The solution is presented in further detail using an embodiment of a four wheel drive electric car with independent motors, such as the one depicted in Figure 2, that can be controlled trough a central computer. The solution can also be used in other arrangements with different number of driving wheels 1, different energy sources and differences in other parameters.

In an embodiment, the calculation unit 7 also comprises a tire wear assessment module 9. This module collects the data from torque controller 8 regarding applied torques at individual driving wheels 1 during the maximum allowable torque determination cycles as well as during regular driving, it also collects the data from all wheel rotation speed sensors 5 mounted on the driving wheels 1. Further, the tire wear assessment module 9 also utilizes all available data regarding calculated slip ratios within the linear slip region, steering, other sensor information that may be available, such as inclination, individual loads on driving wheels and similar.

Said wear assessment module 9 continuously compares primarily, but not exclusively, the measured/calculated maximum allowable grip between different driving wheels. It stores the actual values for each individual driving wheel as well as ratios of determined maximum allowable grips for different driving wheels 1 at the same time. The information is stored and averaged over a predetermined period of time. The module determines current moving average values with different period of collection of data. In one embodiment, the module compares the maximum allowable torques measured on driving wheels simultaneously over the last 1 h of driving, over the last 10 h of driving and over the last 100 h of driving. The outside influences on the actual measured values of maximum allowable torque, such as weight distribution variations while driving, curvature, style of driving, inclination, road conditions, temperature, and similar, even out over the longer period of time. The intrinsic factors that do influence the value of maximum allowable grip for each driving wheel individually (or a non-driving wheel, when it is fitted with appropriate sensors) are the basic weight distribution for the vehicle, the steering vs. non-steering wheels, and differences between wheels on different axes. These intrinsic factors are unique for each wheel, however they remain constant when a long-time average is considered. Therefore the only variable of considerable interest and influence regarding maximum allowable torque, or in other words, the grip, is the condition of the tire. Condition of the tire can further be divided to tire wear and tire pressure. Pressure variations may be eliminated through the use of pressure sensors, or left as part of the variable factor. The remaining variable factor (tire pressure with tire wear or tire wear alone) can be controlled through the comparison in the tire wear assessment module of the data for different length of moving averages.

What is compared in the tire wear assessment module 9 are the differences between the moving averages for each driving wheel/tire individually as well as between different driving wheels 1, in addition, data from non-driving wheel may be collected as well. It is expected that the tire performance over a longer period of time (e.g. 100 h of driving in the embodiment) is deteriorating. Consequently, a parameter is followed that compares the 100 h moving average with the 10 h moving average and measures the decline in the calculated values. Alternatively, previous 100 h moving average values may be stored and compared as well. The decline ratio is calculated for each individual driving wheel 1. When the tire wear assessment module 9 determines that one or more of the tires are out of the predetermined tolerance range, that is, excessive tire wear is detected, as compared to other tires, the system may compensate through the application of torque vectoring techniques in order to reduce the relative burden (such as acceleration torques, breaking forces) on the driving wheel(s) 1 in question so as to reduce future tire wear. The main idea of such torque vectoring is to distribute the same torque overall to the driving wheels 1 in a manner that leads to balancing of the wear towards conserving the tires that experienced excessive wear. If the module detects in subsequent driving that such a tire returns towards the normal for other tires, the balance of torques through torque vectoring may be adjusted back to the initial setting or to a setting that protects other tire(s) as necessary. It should be noted, that when there are no sensors for tire pressure in place, it is possible that the reduction in traction detected by the wear assessment module 9 can be a result of deflating tires. This can be resolved through a signal to the driver when the values of the 1 h moving average are substantially different from the 10 h moving average for one (or possibly several) of the tires. On the other hand, when the 1 h moving average for most of the tires is significantly different that the values for the 10 h moving averages, it is probable, that an outside factor is influencing the results. Such outside factors may include outside temperature, weather events or off-road use, higher loads (e.g. family trip) etc. Such readings may be filtered and the data disregarded in the longer moving averages. It is understood that the lengths of moving averages in this embodiment in no way limit other possible settings, that are more suitable for various vehicles, drivers and other settings.

The determination of maximum allowable torque by said wear assessment module 9 simultaneously on all wheels need not be as frequent as the determination of maximum allowable torque on one or more of the driving wheels as needed for the purpose of determining current road surface conditions. As an alternative or supplement for the calculations of tire wear based on maximum allowable torque calculations, the tire slip ratios in the linear slip range may also be utilized as the input into the tire wear assessment module 9 with appropriate adaptations of the algorithm. In some embodiments where the differences in tire wear are larger it may be beneficial to use comparison of slip ratio at torques lower than the maximum allowable torque, since such measurements put less strain on the tires of the driving wheels. The slip ratios in the said linear region are however lower, resulting in lower differences between tires that are more difficult to assess, as well as more dependency on actual road conditions - for example, a low-grip surface may make comparison between different tires very difficult as some of the tires may suddenly exhibit complete slipping conditions while others may retain considerable grip.

Depending on the processing power and storage available to the tire wear assessment module 9, these measurements may be made once every 10 s, on every minute or even up to only a few times an hour. The frequency determines the precision, however the amount of data increases accordingly. Further, the longer moving averages may not store every measurement point, but rather take averages of several consecutive points as a simple point to reduce the amount of stored data.

The above described arrangement and its variants may be applied to different wheels of the vehicle using several strategies. For determination of the current maximum allowable torque, relating primarily to current road surface conditions, it may be sufficient to measure the slip ratio of a single driving wheel 1 according to the described measuring cycle algorithm. It is understood that the driving wheel 1 may not always be the same, but alternations in utilization of all driving wheels 1 may be used to prevent excessive strain on one of the tires over time. Further, it may be beneficial to use a strategy, where more than one driving wheel 1 on a single axis of the vehicle is used for determining maximum allowable torque. It is known that maximum allowable torques vary substantially between, for example, the left-side wheels and the right-side wheels when the vehicle is in a curve or possibly when the road surfaces are not the same on both mentioned vehicle sides. Therefore, it is beneficial in that case to determine maximum allowable torque on more than one wheel of the same axis simultaneously. This may also provide additional information to the computational unit 6 which can be used for adaptation of the torque vectoring strategy. In case of the mentioned torque vectoring strategy, specifically when the tire wear module 9 is active, it is beneficial to determine maximum allowable torque on all driving wheels simultaneously as well as optionally measure the slip ratios of non-driving wheels (e.g. during braking or curves). Not all driving wheels 1 may be used all of the time, several possible strategy for optimization may be implemented, that reduce the number of the driving wheels 1 included in a determination and therefore reduce required processing power but still provide sufficient information as required by the computational unit.

The system may also be configured to implement an algorithm using additional information provided from steering angle and yaw angle sensors in order to calculate the effect of vehicle acceleration in the curve and determine the traction or braking torque limitation in given driving conditions. Yaw in connection with steering angle of the driving wheels 1 is known to be an important factor in calculating the parameters of a vehicle entering a curve and may influence calculations of actual vehicle speed, lateral drift of the tires, tilt of the vehicle as well as be an important factor for preventive excessive tire wear, especially in commercial vehicles with multiple axes and trailers where differences in wheel rotation speeds during maneuvering may be very large. Steering angle and yaw detection can therefore be used to improve the distribution of torques to individual driving wheels of the vehicle as a measure for compensating differences in wheel speed arising from a vehicle going through a curve as a measure of reducing tire wear. In addition, acceleration and especially braking torques may be adapted to relate to differences in wheel rotation speeds on the left side of the vehicle compared to the right side of the vehicle, taking into account differences between axes as well, to provide the best possible grip, stability and safety of the vehicle.

A GPS system or another similar method for connecting the actual position of the vehicle with map and traffic information, including cameras, may also be used as one of the options for communication between vehicles on the same segment of road exchanging critical information, including maximum allowable grip, or in this case rather road friction coefficient, possible incidents and other information. According to obtained information from such a system and in combination with the maximum allowable torque determination, it is possible to calculate a maximum safe speed for approaching a corner. In addition, the driver may also be alerted as necessary, or the vehicle may be configured to automatically reduce the speed safely to the desired value before approaching a turn or other road hazard. In another embodiment, the obtained data may also be used for further different safety or performance features. It can be used for determination of the sharpest curve that can be driven without the slip, in which case the warning can be forwarded to the driver as a real-time indicator independent off GPS or similar systems.

**LIST OF REFERENCES**

1    driving wheel
4    torque detecting means
5    rotation speed detection sensor
6    computational unit (not shown)
7    electric motor
8    torque controller (not shown)
9    tire wear assessment module (not shown)

**Claims**

1. An arrangement for determining a maximum allowable torque at a driving wheel (1) of an electric motor (7) vehicle, wherein maximum allowable torque defines the maximum torque that can be applied to a road surface by a driving wheel (1) before the torque at the driving wheel (1) starts to decrease with increasing wheel slip of the driving wheel (1), the arrangement comprising

   two or more driving wheels (1),
   rotational speed detection sensors (5) for each driving wheel (1),
   a computational unit (6) configured to adjust output torque at each driving wheel (1),
   wherein the driving wheels (1) are each driven individually by electric motors (7) each configured to be operated separately by an inverter controlling torque output of the motor, and
   wherein the computational unit (6) is configured to trigger a transient change in the drive torque at at least one driving wheel (1), and wherein rotational speed parameters are determined in said at least one driving wheel (1), **characterized in that** said electric motors (7) are direct drive motors, without implementation of gearing and transmission elements, wherein said rotation speed detection sensors (5) are designed to detect rotational differences of equal or less than 1 degree for each driving wheel (1), and wherein said rotational differences are further evaluated by said computational unit (6) to determine tire slip ratio (s) defined by the ratio of the resulting rotation speed of wheel change ($v_w$ - $v_s$) during the transient change of torque and the baseline rotation speed ($v_s$) of the same driving wheel (1) when the vehicle is at constant or at nearly constant speed, wherein the computational unit (6) is configured to transiently apply several differing torque changes to the same driving wheel (1) in a short sequence within the total time of 0.5 seconds, more preferably less than 0.1 seconds, said differing transient torque changes comprising a cycle in order to obtain several measurement points of slip ratios in dependence of the magnitude of transient torque changes and to determine from said measurement points a slip curve for the current driving conditions, said slip curve being the basis to determine at its peak the maximum allowable torque, which is further defined as the torque at which the maximum of the driving force delivered to the road surface is achieved, where maximum acceleration or deceleration force is applied to the vehicle.

2. The arrangement according to claim 1, **characterized in that** resulting total accelerations caused by the maneuver of transiently changing drive torques in summation of all driving wheels (1) are minimal and not detectable by the vehicle driver.

3. The arrangement according to any of the previous claims, **characterized in that** the current driving conditions for which the slip curve is determined from said measurement points, includes tire condition, temperature, road surface condition, and inclination, said slip curve being the basis to determine further critical parameters for driving conditions, such as maximum friction coefficient and linear slip ratio region.

4. The arrangement according to one of the preceding claims, **characterized in that** said differing transient torque changes in a said cycle range from 10% of estimated maximum allowable torque change to 170% of estimated allowable torque change, wherein the actual selected torque changes are dependent each time on previous measurements in the same cycle, in order to minimize the required number of measurements for determining said slip curve but still be sufficient to unequivocally determine the slip curve in which the maximum allowable torque is determined with the margin of error of 5% or less.

5. The arrangement according to one of the preceding claims, **characterized in that** the torque changes are applied in a single sequence of step-wise torque changes of the same size allowing intervals of up to 20 ms between said changes of torque in order for the torque applied to the driving wheel (1) to stabilize and a point on said slip curve to be determined.

6. The arrangement according to one of the preceding claims, **characterized in that** the time interval between cycles of determining parameters is between 0.1 and 5 seconds, preferably between 0.5 and 2 seconds, wherein said interval is adjusted within this range according to previously detected conditions.

7. The arrangement according to any of the previous claims, **characterized in that** said arrangement further comprises a tire wear assessment module (9) configured to assess the wear of each individual tire on each of the driving wheels (1) as a result of differences in the detected slip ratios as compared to slip ratios for other driving wheels (1) when comparable changes of torque are applied to said driving wheels, and/or as a result of the changes in the detected slip ratios as compared to a history of recorded slip ratios for the same wheel.

8. The arrangement according to claim 7, **characterized in that** the tire wear assessment module (9) compares the history of the data obtained by available sensors and calculations within the vehicle system for different individual wheels, to assess whether the slippage of any of the tires is increasing disproportionally over time as compared to other tires on other wheels.

9. The arrangement according to claims 7 or 8, **characterized in that** the tire wear assessment module (9) is configured to selectively influence the balance between different driving wheels (1) in order to reduce the relative torques on the wheel exhibiting increased slippage as an indicator of increased tire wear, wherein the torques are distributed between all other wheels in a way that the stability of the vehicle remains unaffected and the total torque applied to the road surface remains unchanged.

10. The arrangement according to any of the previous claims, **characterized in that** the data obtained by available sensors and calculations within the vehicle system, such as road friction coefficients, maximum allowable torque, tire condition and others, are communicated to the driver during the driving, to the driver after the driving to inform him about the safety aspect of his driving, to vehicle maintenance personnel to inform them about the tire quality and/or to road maintenance personnel to inform them about the quality of the road surface.

11. The arrangement according to any of the previous claims, **characterized in that** said transient changes in drive torque are produced on only one or more wheels of one axis.

12. The arrangement according to any of the previous claims, **characterized in that** said transient changes in drive torques are produced sequentially and/or simultaneously on various driving wheels (1) or on various combinations of driving wheels.

13. The arrangement according to any of the previous claims, **characterized in that** the geographical position of the vehicle on the road is determined by GPS or other method and where the road route is determined by maps or cameras or other method and where data obtained by available sensors and calculations within the vehicle system is utilized for adjusting vehicle speed before entering into a curve.

14. The arrangement according to any of claims 8 to 13, **characterized in that** said tire wear assessment module (9), in combination with the determination of geographical position is able to recognize a frequently used route, such as drive to work, and compare the data for this route with previous runs of the same route.

**Patentansprüche**

1.  Anordnung zur Bestimmung eines maximal zulässigen Drehmoments eines Antriebsrads (1) eines Fahrzeugs mit Elektromotor (7), wobei das maximal zulässige Drehmoment das maximale Drehmoment definiert, das auf eine Straßenoberfläche durch ein Antriebsrad (1) ausübbar ist, bevor das Drehmoment an dem Antriebsrad (1) mit zunehmendem Radschlupf des Antriebsrads (1) beginnt, kleiner zu werden, wobei die Anordnung aufweist zwei oder mehr Antriebsräder (1),

    Drehgeschwindigkeitserfassungssensoren (5) für jedes Antriebsrad (1),
    eine Recheneinheit (6), die ausgebildet ist, ein Ausgangsdrehmoment jedes Antriebsrads (1) einzustellen, wobei die Antriebsräder (1) jeweils individuell durch Elektromotoren (7) angetrieben sind, wovon jeder ausgebildet ist, separat von einem Umrichter, der das von dem Motor ausgegebene Drehmoment steuert, angesteuert zu werden, und
    wobei die Recheneinheit (6) ausgebildet ist, eine kurzzeitige Änderung des Antriebsdrehmoments zumindest eines Antriebsrads (1) auszulösen, und wobei die Drehgeschwindigkeitsparameter für das mindestens eine Antriebsrad (1) bestimmt werden,
    **dadurch gekennzeichnet, dass**
    die Elektromotoren (7) Direktantriebsmotoren ohne Implementierung von Zahnrad- und Getriebeelementen sind, wobei die Drehgeschwindigkeitserfassungssensoren (5) ausgebildet sind, Unterschiede der Drehung von kleiner gleich 1 Grad für jedes Antriebsrad (1) zu erfassen, und wobei die Unterschiede der Drehung durch die Recheneinheit (6) weitergehend bewertet werden, um ein oder mehrere Reifenschlupfverhältnisse, das bzw. die definiert sind als das Verhältnis der resultierenden Änderung der Raddrehgeschwindigkeit ($v_w$ - $v_s$) während der kurzzeitigen Änderung des Drehmoments zu der Grunddrehgeschwindigkeit ($v_s$) des gleichen Antriebsrads (1), wenn das Fahrzeug mit konstanter oder nahezu konstanter Geschwindigkeit fährt,
    wobei die Recheneinheit (6) ausgebildet ist, kurzzeitig mehrere unterschiedliche Drehmomentänderungen an demselben Antriebsrad (1) in kurzer Sequenz innerhalb der Gesamtzeit von 0,5 Sekunden, bevorzugter von weniger als 0,1 Sekunden, auszuüben, wobei die unterschiedlichen kurzzeitigen Drehmomentänderungen einen Zyklus beinhalten, um mehrere Messpunkte von Schlupfverhältnissen in Abhängigkeit von der Größe der kurzzeitigen Drehmomentänderungen zu erhalten und aus den Messpunkten eine Schlupfkurve für die aktuellen Fahrbedingungen zu bestimmen, wobei die Schlupfkurve die Grundlage ist, um an ihrem Höchstwert das maximal zulässige Drehmoment zu bestimmen, das ferner als das Drehmoment definiert ist, bei welchem das Maximum der auf die Straßenoberfläche übertragenen Antriebskraft erreicht wird, wobei eine maximale Beschleunigungskraft oder Abbremsungskraft auf das Fahrzeug ausgeübt wird.

2.  Anordnung nach Anspruch 1, **dadurch gekennzeichnet, dass** die gesamten Beschleunigungen, die durch das Manöver der kurzfristigen Änderung der Antriebsdrehmomente in Summe für alle Antriebsräder (1) hervorgerufen werden, minimal und für den Fahrzeugführer nicht erkennbar sind

3.  Anordnung nach einem der vorhergehenden Ansprüche, **dadurch gekennzeichnet, dass** die aktuellen Fahrbedingungen, für welche die Schlupfkurve aus den Messpunkten bestimmt wird, den Reifenzustand, Temperatur, Straßenoberflächenzustand und Neigung enthalten, wobei die Schlupfkurve die Grundlage ist, um weitere kritische Parameter für Fahrbedingungen, etwa einen maximalen Reibungskoeffizienten und einen linearen Schlupfverhältnisbereich, zu bestimmen.

4.  Anordnung nach einem der vorhergehenden Ansprüche, **dadurch gekennzeichnet, dass** die unterschiedlichen kurzzeitigen Drehmomentänderungen in dem Zyklus von 10 Prozent einer abgeschätzten maximalen zulässigen Drehmomentänderung bis zu 170 Prozent einer abgeschätzten zulässigen Drehmomentänderung reichen, wobei die tatsächlichen ausgewählten Drehmomentänderungen zeitlich jeweils von vorhergehenden Messungen in dem gleichen Zyklus abhängig sind, um die erforderliche Anzahl von Messungen für die Bestimmung der Schlupfkurve zu minimieren, aber um dennoch ausreichend zu sein, um diejenige Schlupfkurve eindeutig zu bestimmen, bei der das maximal zulässige Drehmoment mit einem Fehlerbereich von 5 Prozent oder weniger bestimmt ist.

5.  Anordnung nach einem der vorhergehenden Ansprüche, **dadurch gekennzeichnet, dass** die Drehmomentänderungen in einer einzigen Sequenz von stufenweise erfolgenden Drehmomentänderungen mit gleicher Größe ausgeübt werden, wodurch Intervalle von bis zu 20 ms zwischen den Änderungen des Drehmoments zulässig sind, um zu ermöglichen, dass sich das auf das Antriebsrad (1) ausgeübte Drehmoment an einem Punkt der zu bestimmenden Schlupfkurve stabilisiert.

6. Anordnung nach einem der vorhergehenden Ansprüche, **dadurch gekennzeichnet, dass** das Zeitintervall zwischen Zyklen zur Bestimmung von Parametern von 0,1 bis 5 Sekunden, vorzugsweise von 0,5 bis 2 Sekunden reicht, wobei das Intervall innerhalb dieses Bereiches entsprechend den zuvor erfassten Bedingungen eingestellt wird.

7. Anordnung nach einem der vorhergehenden Ansprüche, **dadurch gekennzeichnet, dass** die Anordnung ferner ein Reifenverschleißbewertungsmodul (9) aufweist, das ausgebildet ist, den Verschleiß jedes einzelnen Reifens in jedem der Antriebsräder (1) als Ergebnis von Unterschieden der erfassten Schlupfverhältnisse im Vergleich zu Schlupfverhältnissen für andere Antriebsräder (1) zu bewerten, wenn vergleichbare Drehmomentänderungen auf die Antriebsräder ausgeübt werden, und/oder als Ergebnis der Änderung der erfassten Schlupfverhältnisse im Vergleich zu einer Historie aufgezeichneter Schlupfverhältnisse für das gleiche Rad zu bewerten.

8. Anordnung nach Anspruch 7, **dadurch gekennzeichnet, dass** das Reifenverschleißbewertungsmodul (9) die Historie der Daten, die durch verfügbare Sensoren und Berechnungen innerhalb des Fahrzeugsystems für unterschiedliche einzelne Räder erhalten werden, vergleicht, um zu bewerten, ob der Schlupf eines der Reifen sich disproportional im zeitlichen Verlauf im Vergleich zu anderen Reifen in anderen Rädern erhöht.

9. Anordnung nach Anspruch 7 oder 8, **dadurch gekennzeichnet, dass** das Reifenverschleißbewertungsmodul (9) ausgebildet ist, die Ausgewogenheit zwischen unterschiedlichen Antriebsrädern (1) zu beeinflussen, um die relativen Drehmomente auf das Rad, das einen erhöhten Schlupf als Indikator eines erhöhten Reifenverschleißes zeigt, zu reduzieren, wobei die Drehmomente auf alle anderen Räder in einer Weise verteilt werden, so dass die Stabilität des Fahrzeugs unbeeinflusst bleibt und das auf die Straßenoberfläche übertragene Gesamtdrehmoment unverändert bleibt.

10. Anordnung nach einem der vorhergehenden Ansprüche, **dadurch gekennzeichnet, dass** die von verfügbaren Sensoren und Berechnungen innerhalb des Fahrzeugsystems erhaltenen Daten, etwa Straßenreibungskoeffizienten, maximal zulässiges Drehmoment, Reifenzustand und andere, übermittelt werden an den Fahrzeugführer während des Fahrens, an den Fahrzeugführer nach dem Fahren, um ihn über den Sicherheitsaspekt seines Fahrens zu informieren, an das Fahrzeugwartungspersonal, um dieses über die Reifenqualität zu informieren, und/oder an das Straßenwartungspersonal, um dieses über die Qualität der Straßenoberfläche zu informieren.

11. Anordnung nach einem der vorhergehenden Ansprüche, **dadurch gekennzeichnet, dass** die kurzzeitigen Änderungen des Antriebsdrehmoments nur an einem oder mehreren Rädern einer einzelnen Achse erzeugt werden.

12. Anordnung nach einem der vorhergehenden Ansprüche, **dadurch gekennzeichnet, dass** die kurzzeitigen Änderungen der Antriebsdrehmomente sequenziell und/oder gleichzeitig an diversen Antriebsrädern (1) oder diversen Kombinationen von Antriebsrädern erzeugt werden.

13. Anordnung nach einem der vorhergehenden Ansprüche, **dadurch gekennzeichnet, dass** die geografische Position des Fahrzeugs auf der Straße durch GPS oder ein anderes Verfahren ermittelt wird, und wobei die Straßenführung durch Karten oder Kameras oder ein anderes Verfahren bestimmt wird und wobei Daten, die durch verfügbare Sensoren und Berechnungen innerhalb des Fahrzeugsystems erhalten werden, für die Einstellung der Fahrzeuggeschwindigkeit vor Eintritt in eine Kurve verwendet werden.

14. Anordnung nach einem der Ansprüche 8 bis 13, **dadurch gekennzeichnet, dass** das Reifenverschleißbewertungsmodul (9) in Verbindung mit dem Bestimmen einer geografischen Position ausgebildet ist, eine häufig verwendete Route, etwa eine Fahrt zur Arbeit, zu erkennen und die Daten für diese Route mit früheren Fahrten auf der gleichen Route zu vergleichen.

**Revendications**

1. Agencement pour déterminer un couple maximum admissible au niveau d'une roue d'entraînement (1) d'un véhicule à moteurs électriques (7), dans lequel le couple maximum admissible définit le couple maximum qui peut être appliqué sur une surface de route par une roue d'entraînement (1) avant que le couple au niveau de la roue d'entraînement (1) ne commence à diminuer tandis que le patinage de roue de la roue d'entraînement (1) augmente, l'agencement comprenant :

   deux roues d'entraînement ou plus (1) ;

des capteurs de détection de vitesse de rotation (5) pour chaque roue d'entraînement (1) ; et

une unité de calcul (6) configurée pour régler le couple de sortie au niveau de chaque roue d'entraînement (1), dans lequel les roues d'entraînement (1) sont chacune entraînées individuellement par des moteurs électriques (7) dont chacun est configuré pour être actionné séparément par une sortie de couple de commande d'inverseur du moteur, et

dans lequel l'unité de calcul (6) est configurée pour déclencher une variation transitoire du couple d'entraînement au niveau d'au moins une roue d'entraînement (1) et dans lequel des paramètres de vitesse de rotation sont déterminés dans ladite au moins une roue d'entraînement (1),

**caractérisé en ce que** lesdits moteurs électriques (7) sont des moteurs à entraînement direct, sans mise en œuvre d'éléments d'engrenage et de transmission, dans lequel lesdits capteurs de détection de vitesse de rotation (5) sont conçus pour détecter des différences rotationnelles égales ou inférieures à 1 degré pour chaque roue d'entraînement (1), et dans lequel lesdites différences rotationnelles sont en outre évaluées par ladite unité de calcul (6) pour déterminer un taux de patinage de pneu (s) qui est défini par le rapport de la variation de vitesse de rotation de roue résultante ($v_w - v_s$) pendant la variation transitoire de couple et de la vitesse de rotation de ligne de base ($v_s$) de la même roue d'entraînement (1) lorsque le véhicule est à vitesse constante ou pratiquement constante,

dans lequel l'unité de calcul (6) est configurée pour appliquer de façon transitoire plusieurs variations de couple différentes sur la même roue d'entraînement (1) selon une séquence courte à l'intérieur du temps total de 0,5 seconde, de façon davantage préférable, inférieur à 0,1 seconde, lesdites variations de couple transitoires différentes comprenant un cycle afin d'obtenir plusieurs points de mesure de taux de patinage en fonction de l'amplitude de variations de couple transitoires et afin de déterminer, à partir desdits points de mesure, une courbe de patinage pour les conditions de conduite courantes, ladite courbe de patinage constituant la base pour déterminer, au niveau de sa crête, le couple maximum admissible, lequel est en outre défini en tant que couple auquel le maximum de la force d'entraînement délivrée sur la surface de route est atteint, point auquel une force d'accélération ou de décélération maximum est appliquée sur le véhicule.

2.  Agencement selon la revendication 1, **caractérisé en ce que** les accélérations totales résultantes qui sont générées par l'application de couples d'entraînement variant de façon transitoire, en termes de sommation de toutes les roues d'entraînement (1), sont minimum et ne peuvent pas être détectées par le conducteur du véhicule.

3.  Agencement selon l'une quelconque des revendications précédentes, **caractérisé en ce que** les conditions de conduite courantes pour lesquelles la courbe de patinage est déterminée à partir desdits points de mesure incluent la condition du/des pneu(s), la température, la condition de surface de route et l'inclinaison, ladite courbe de patinage constituant la base pour déterminer d'autres paramètres critiques pour les conditions de conduite, tels que la région de coefficient de friction maximum et de taux de patinage linéaire.

4.  Agencement selon l'une quelconque des revendications précédentes, **caractérisé en ce que** lesdites variations de couple transitoires différentes dans un dit cycle s'inscrivent dans une plage qui va de 10 % de variation de couple maximum admissible estimée à 170 % de variation de couple admissible estimée, dans lequel les variations de couple sélectionnées réelles dépendent chaque fois de mesures antérieures dans le même cycle, afin de minimiser le nombre requis de mesures pour déterminer ladite courbe de patinage tout en assurant toujours un nombre de mesures suffisant afin de déterminer de manière non équivoque la courbe de patinage dans laquelle le couple maximum admissible est déterminé selon la marge d'erreur de 5 % ou moins.

5.  Agencement selon l'une quelconque des revendications précédentes, **caractérisé en ce que** les variations de couple sont appliquées selon une unique séquence de variations de couple par pas de la même dimension, ce qui permet des intervalles allant jusqu'à 20 ms entre lesdites variations de couple afin que le couple qui est appliqué sur la roue d'entraînement (1) soit stabilisé et qu'un point sur ladite courbe de patinage soit déterminé.

6.  Agencement selon l'une quelconque des revendications précédentes, **caractérisé en ce que** l'intervalle de temps entre les cycles de détermination de paramètres est entre 0,1 et 5 secondes, de préférence entre 0,5 et 2 secondes, dans lequel ledit intervalle est réglé à l'intérieur de cette plage conformément à des conditions détectées antérieurement.

7.  Agencement selon l'une quelconque des revendications précédentes, **caractérisé en ce que** ledit agencement comprend en outre un module d'évaluation d'usure de pneu (9) configuré pour évaluer l'usure de chaque pneu individuel sur chacune des roues d'entraînement (1) en tant que résultat de différences au niveau des taux de patinage détectés par comparaison avec les taux de patinage pour d'autres roues d'entraînement (1) lorsque des variations de couple comparables sont appliquées sur lesdites roues d'entraînement, et/ou en tant que résultat des variations au niveau des taux de patinage détectés par comparaison avec un historique de taux de patinage enregistrés pour la même roue.

8. Agencement selon la revendication 7, **caractérisé en ce que** le module d'évaluation d'usure de pneu (9) compare l'historique des données obtenues par les capteurs disponibles et les calculs disponibles à l'intérieur du système de véhicule pour différentes roues individuelles, afin d'évaluer si le patinage de l'un quelconque des pneus est en train ou non d'augmenter de façon disproportionnée au fil de l'écoulement du temps par comparaison avec d'autres pneus sur d'autres roues.

9. Agencement selon la revendication 7 ou 8, **caractérisé en ce que** le module d'évaluation d'usure de pneu (9) est configuré pour influencer de façon sélective l'équilibre entre différentes roues d'entraînement (1) afin de réduire les couples relatifs sur la roue qui présente un patinage augmenté en tant qu'indicateur d'usure de pneu augmentée, dans lequel les couples sont distribués entre toutes les autres roues d'une façon qui est telle que la stabilité du véhicule reste non affectée et que le couple total qui est appliqué sur la surface de route reste inchangé.

10. Agencement selon l'une quelconque des revendications précédentes, **caractérisé en ce que** les données qui sont obtenues par les capteurs disponibles et les calculs disponibles à l'intérieur du système de véhicule, telles que les coefficients de friction de route, le couple maximum admissible, la condition de pneu et autres, sont communiquées au conducteur pendant la conduite, au conducteur après la conduite pour l'informer en ce qui concerne l'aspect sécurité de sa conduite, aux personnes en charge de la maintenance du véhicule pour les informer en ce qui concerne la qualité du pneu/des pneus et/ou aux personnes en charge de l'entretien des routes pour les informer en ce qui concerne la qualité de la surface de route.

11. Agencement selon l'une quelconque des revendications précédentes, **caractérisé en ce que** lesdites variations transitoires du couple d'entraînement sont produites sur seulement une ou plusieurs roues d'un essieu.

12. Agencement selon l'une quelconque des revendications précédentes, **caractérisé en ce que** lesdites variations transitoires des couples d'entraînement sont produites de façon séquentielle et/ou de manière simultanée sur diverses roues d'entraînement (1) ou sur diverses combinaisons de roues d'entraînement.

13. Agencement selon l'une quelconque des revendications précédentes, **caractérisé en ce que** la position géographique du véhicule sur la route est déterminée par GPS ou par tout autre procédé et dans lequel l'itinéraire sur route est déterminé au moyen de cartes ou de caméras ou de tout autre procédé et dans lequel les données qui sont obtenues par les capteurs disponibles et par les calculs disponibles à l'intérieur du système de véhicule sont utilisées pour régler la vitesse du véhicule avant qu'il n'entre dans une courbe.

14. Agencement selon l'une quelconque des revendications 8 à 13, **caractérisé en ce que** ledit module d'évaluation d'usure de pneu (9), en combinaison avec la détermination de la position géographique, permet de reconnaître un itinéraire utilisé fréquemment, tel que celui d'un trajet jusqu'au lieu de travail, et permet de comparer les données pour cet itinéraire avec des données de parcours antérieurs du même itinéraire.

Figure 1

Figure 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5419624 A
- WO 2015005215 A
- GB 201210282 A
- WO 201511540 A
- CN 104175902
- CN 103886190
- WO 2013045584 A
- CN 101920704
- US 6272420 B
- US 6223114 B

- US 5944392 A
- US 2007016354 A
- JP H11334555 B
- US 6076033 A
- US 8498775 B
- US 6418639 B
- US 8055424 B
- US 8886381 B
- US 8463497 B

**Non-patent literature cited in the description**

- **MATSUMOTO, N.** Expert antiskid system. *IEEE IECON'87*, 1987, 810-816